# EUROPEAN PATENT APPLICATION

(11) **EP 1 959 337 A2**
(43) Date of publication of application: **20.08.2008**
(21) Application number: 07122651.8
(22) Date of filing: 07.12.2007
(51) Int. Cl.: G06F 3/048

(54) **Terminal and menu display method**

(30) Priority: 07.02.2007 KR 20070012628
(71) Applicant: LG Electronics Inc., Yeongdeungpo-gu Seoul 150-721 (KR)
(72) Inventor: Jeong, Kye Sook c/o LG ELECTRONICS INC., 153-801, SEOUL (KR); Jung, Ha Yang c/o LG ELECTRONICS INC., 153-801, SEOUL (KR)
(74) Representative: Cabinet Plasseraud

(57) **Abstract**

A method, device and computer program product for efficiently displaying multiple menu icons on a display, including a method, device and computer program product for efficiently zooming in and out of a plurality of displayed menu icons.

## Description

### CROSS REFERENCE TO RELATED APPLICATIONS

This nonprovisional application claims priority under 35 U.S.C. §119(a) on Patent Application No. 10-2007-0012628 filed in Republic of Korea on February 7, 2007 the entire contents of which are hereby incorporated by reference.

### BACKGROUND

### Field of the Invention

This document relates to a menu display method for displaying menus on a terminal device.

### Related Art

In recent years, various functions have been integrated in portable terminals such as cell phones, personal digital assistants and the like. Accordingly, the number of menus in these terminals have increased. In conventional terminals, the menus are hierarchically arranged by dividing the menus into top and bottom menus. Therefore, users are disadvantaged by having to execute excessive selection operations in order to select the desired menus.

### SUMMARY

A method, device and computer program product for efficiently displaying multiple menus on a display.

In one aspect of the invention, a menu display method includes a step of selecting a menu mode. This method may also include a step of displaying a specific number of the menus when the menu mode is entered. Also, this method may include the step of changing the number of displayed menus when a zoom is selected.

In another aspect of the invention, a terminal includes an input and a display configured to display one or more menus. This terminal may include a controller. The controller is configured to display the specific number of the menus when the menu mode is entered, and change the number of displayed menus when the zoom is selected by using the input.

### BRIEF DESCRIPTION OF THE DRAWINGS

The implementation of this document will be described in detail with reference to the following drawings in which like numerals refer to like elements.

FIG. 1 is a block diagram illustrating a terminal according to one embodiment;

FIG. 2 is a flow chart of a menu display method of a terminal according to another embodiment;

FIGS. 3A to 3C are examples of the screens that display menus through a display of FIG. 1;

FIGS. 4A to 4C are another examples of the screens that display menus through the display of FIG. 1;

FIGS. 5A and 5B are examples of the screens that display the result of a menu selection through the display of FIG. 1;

FIGS. 6A to 6C are examples of the screens that display the result of sorting the menus through the display of FIG. 1; and

FIG. 7 is an example of the screen that displays a menu search result through the display of FIG. 1

### DETAILED DESCRIPTION

An implementation of this document will be described in detail with reference to the attached drawings.

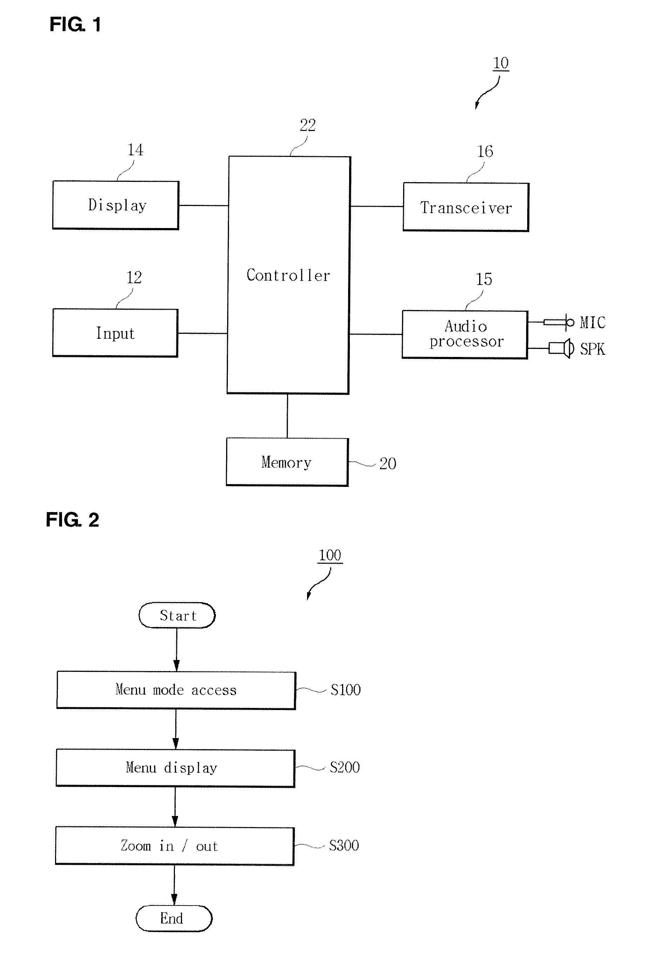

FIG. 1 is a block diagram illustrating a terminal according to one embodiment.

As seen in FIG. 1, the terminal 10 according to one embodiment comprises an input 12, a display 14, an audio processor 15, a transceiver 16, a memory 20, and a controller 22.

The input 12 includes an interface which communicates with a peripheral device or user. The input 12 may be at least one of a keypad having a plurality of key buttons formed thereon, a navigation key having a plurality of direction keys formed thereon, a jog device for selecting an input according to the amount of rotation, a voice input device having a voice recognizer, a touch input device, such as a touch pad or touch screen. Various information or commands, for example, information or commands related to menu access or menu selection, zoom selection, menu sorting, menu search and the like, are input into the terminal 10 from a peripheral device or a user through the input 12.

The display 14 displays a variety of processes and control operations of the terminal 10, a variety of images, etc., according to control of the controller 22. The display 14 provides inputs of various information or commands related to menu access or menu selection, zoom selection, menu sorting, menu search and the like exemplified above through the screen. Via the inputs of various information or commands displayed through the display 14, the user may know the progress of a variety of processes and control operations of the terminal 10.

If one of a specific number of menus is designated by using the input 12 at the menu mode, the display 14 displays the menus in groups. If the zoom is selected at the above state by using the input 12, the display 14 displays the menus the number of which is more than or less than the number of menus in the previous state according to whether the zoom operation is a zoom in or zoom out. The display 14 also displays the result of menu sorting and searching provided by the terminal 10. A description thereof will be described in detail with reference to FIGS. 2 to 7 hereinafter.

In the terminal 10 according to one embodiment, the display 14 is integrated with a touch input 12, such as a touch screen, to thus display various information or commands 12 related to menu access, menu selection, zoom selection, zoom selection, menu sorting, zoom menu search, and at the same time a variety of commands may be input when the displayed information or commands is touched.

The audio processor 15 processes data so as to input and output voice through a microphone MIC and a speaker SPK. The audio processor 15 processes data so as to output voice through a speaker SPK corresponding to a variety of processes and control operations of the terminal 10. The audio processor 15 processes data so as to let voice according to various information or commands to be input through a microphone MIC.

The audio processor 15 may generate sound through the speaker SPK when a menu is designated or selected. Especially, in case the menus sorted and displayed on the display 14 by groups are selected by using the input 12, different sounds may be generated by groups.

Additionally, the audio processor 15 may receive sound through the microphone MIC by the input 12 for inputting various information or commands, for example, information or commands related to menu access or menu selection, menu sorting, menu search and so on, if a voice input device having a voice recognizer stored therein is provided, and then transmit it to the voice recognizer.

The transceiver 16 may perform voice or data communication through wired and wireless communication networks. A so-called communication terminal comprising the transceiver 16 may perform a variety of current or future communications, such as voice call, message transfer, webpage connection, data transmission and reception, call connection, instant messenger, etc.

The memory 20 may store programs for processing and controlling the terminal 10, especially, the controller 22. The memory 20 may store a variety of data, for example, reference data, various storage data, and various updatable data for storage. The memory 20 stores the frequency of use of the menus that were explained above or to be explained later, a final menu display state, the proximity between the menus, recently used menus and so on, so that the memory 20 may be used to display on the display 14 information or commands related to menu access or menu selection, zoom selection, menu sorting, menu search and so on.

The controller 22 processes and controls overall operations or functions of the terminal 10. Particularly, the controller 22 processes and controls the overall operations or functions of the terminal 10 related to menu access or menu designation, menu selection, zoom selection, menu sorting, menu search, etc., on the display 14.

FIG. 2 is a flow chart of a menu display method of a terminal according to another embodiment of the invention.

As seen in FIG. 2, the menu display method 100 comprises a menu mode access step S100, a menu display step S200, and a menu zoom step S300.

The menu mode access step S100 includes accessing the menu mode to perform a predetermined function by menu display and selection. In step S100, various methods for accessing the menu mode may be possible

For example, either a menu key or a menu hot key may be provided on the surface of the terminal 10. In this example, the menu mode may be accessed by pressing either the menu key or the hot key. In another example, the menu button may be displayed on the display 14 such as the touch screen, and the menu mode may be accessed by touching the displayed menu button.

The menu mode access step S100 may be performed on the initial screen of the terminal 10, and also may be performed during the execution of a variety of menus, for instance, during the execution of a game or camera shooting.

The menu display step S200 is a step for displaying a specific number of menus through the display 14 in the menu mode accessed in the step S100.

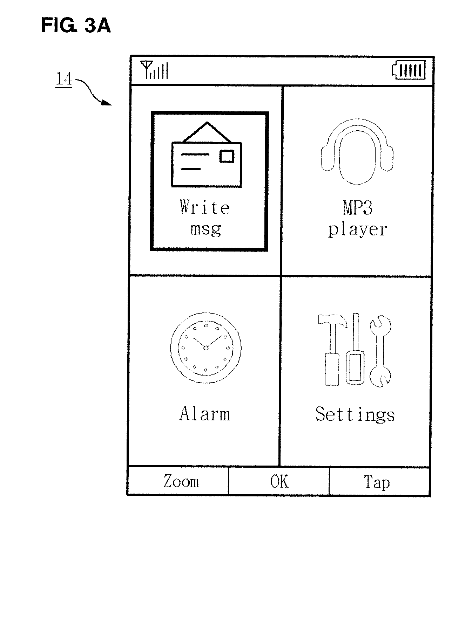

FIGS. 3A to 3C are examples of the screens that display menus through a display of FIG. 1.

In step S200, a user may arbitrarily set the first screen to be one of the screens shown in FIGS. 3A to 3C, or a variant thereof.

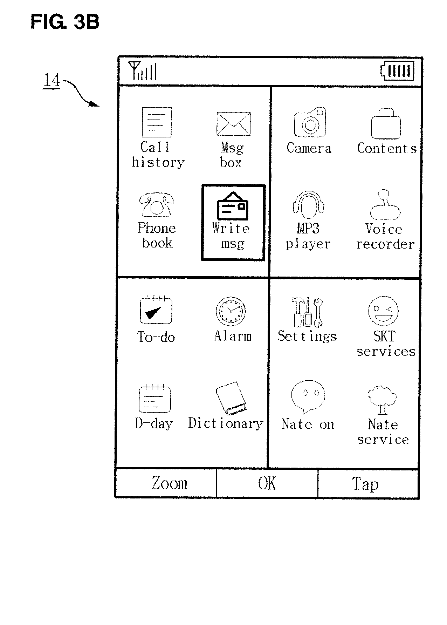

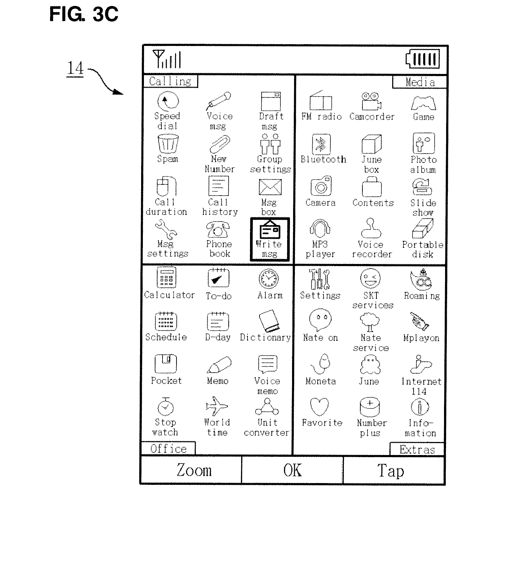

FIG. 3A is a screen where a total of 4 menus and/or menu icons are displayed on each of the quadrants of display 14. The quadrants may or may not be roughly equal in size. FIG. 3B is a screen where a total of 16 (four squares of 4 icons) menu icons are displayed on each of equally divided quadrants on the display 14. FIG. 3C is a screen where a total of 64 (four square of 12 icons) menu icons are displayed on each of four quadrants on the display 14. The quadrants may or may not be roughly equal in size.

When the menu mode is accessed in step S100, the construction and the number of menus to be displayed on the display 14 in step S200 depends upon whether the first screen selected by the user is one of FIGS. 3A to 3C. For example, the user may set the first screen to be the menu screen displayed when the menu mode was last accessed. In this example, if the last menu screen is the screen of FIG. 3B, the first screen in the step S200 will be the screen of FIG. 3B. The option is advantageous for situations when the last menus used previously by users are frequently used when the menu mode is accessed at the next time.

By way of other example, the first screen may be always set as the menu screen with minimum number of menu icons such as is shown in FIG.3A. In this case, the first screen in the step S200 will be FIG.3A. By way of another example, the first screen in the step S200 may be set differently depending on the number of the frequently used menus. In this example, the first screen to be displayed in the step S200 may be FIG.3A if only four menu icons in FIG.3A are frequently used. The first screen to be displayed in the step S200 may be FIG.3B when sixteen menu icons in FIG.3B are frequently used. The first screen to be displayed in the step S200 may be FIG.3C when all menu icons in FIG.3C are equally frequently used.

The menus displayed on the menu screens of FIGS. 3A to 3C may be displayed by icons alone, or by the icons along with at least one of characters, numbers and special characters for explaining the menus.

The displayed menus in the menu screens of FIGS.3A to 3C may be displayed by groups on each of equally or unequally divided quadrants.

The frequently used menus among the menus displayed on the menu screen of FIGS 3A to 3C may be positioned near the boundary line of the quadrants. Accordingly, the higher the frequency of use of the menus is, the closer they are positioned to the center point of the quadrants. Alternatively, frequently used menus may be arranged in a cruciform near the boundary points of the quadrants. The former may be effective when the input 12 is a touch input device, and the latter may be effective when the input 12 is a normal navigation key.

The zoom step S300 is a step which increases or decreases the number of the displayed menu icons on the display 14, corresponding to when the zoom in or out function is selected using the input 12. For example, when the first screen is set as FIG.3A in the menu display step S200 and the zoom out is selected using the input 14 in the zoom step S300, the screen as shown in FIG.3B is then displayed on the display 14. When the zoom out is selected using the input 12 again, the screen as shown in FIG.3C is then displayed on the display 14. When the zoom in is selected using the input 12 reversely, the screen as shown in FIG.3B is switched to the screen as shown in FIG.3A.

The zoom in or out function may be selected by displaying the zoom key button on the bottom of the input 12 (e.g., a touch screen) and pressing the displayed zoom key. When the part of the terminal 10 (e.g., one side of a case) is equipped with the zoom hot key, the zoom in or out may be selected by pressing the zoom hot key on the side of case.

The maximum number of menu icons are displayed on the display 14 at the state of the maximum zoom out. The term "maximum number of menu icons" means either all possible menu icons or a predetermined number of menu icons of the terminal 10. The latter concept corresponds to a scenario where the maximum zoom out screen displays a preset number of menu icons except for infrequently used menus or icons of menus which cause a fatal error due to a mistake in operation.

The user may conveniently change the number of displayed menu icons for executing various functions via zoom step S300. When a few of menus are to be used, the zoom in is selected as shown in FIG.3A. When more menus are to be used, the zoom out is sequentially selected as shown in FIGS. 3B or 3C. Therefore the user may decrease the number of his/her operation using the zoom step S300.

In summary, in step S200 or S300, as shown in FIGS. 3a to 3C, (1) the menus may be displayed by icons and/or character sets, (2) the menus are sorted by groups and displayed on quadrants, and (3) the frequently used menus may be aligned so as to be concentrically spread from the boundary line or the central point of the quadrant, but the present invention is not limited thereto.

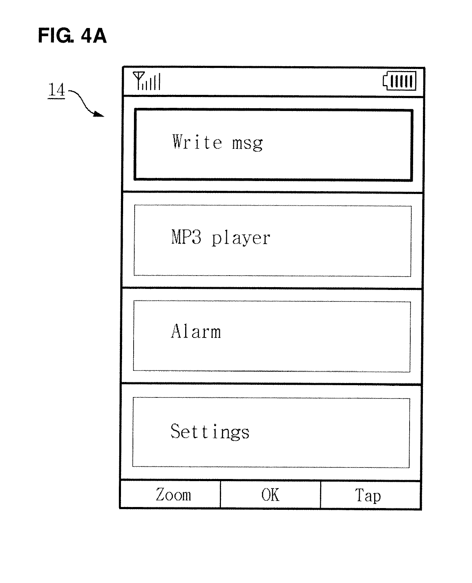

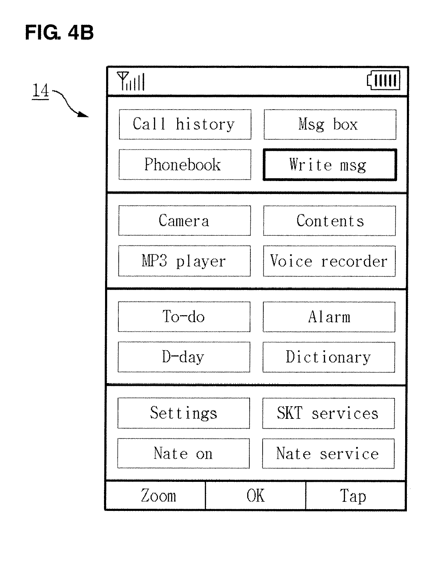

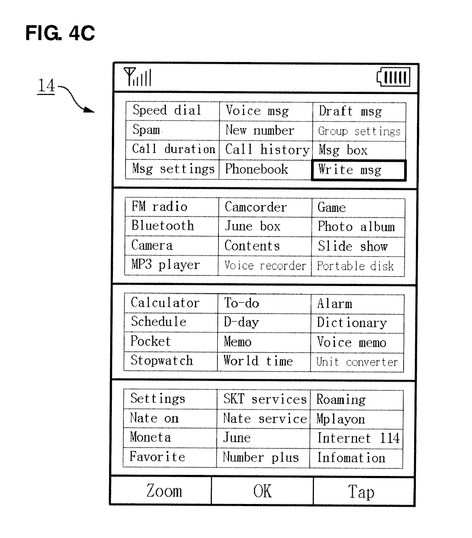

FIGS. 4A to 4C are other examples of screens that display menus via the display of FIG. 1.

Referring to FIGS. 4A to 4C, the menus displayed on display 14 in the steps S200 and S300 may be displayed by either characters, numbers or special character for explaining the menus or a combination thereof without the icons. The menus may be displayed in vertical groups. In this case, the frequently used menus may be positioned on the upper end or lower end of the corresponding vertical group. The frequently used menus are displayed so that they are discriminated from other menus of the corresponding group. In another example, frequently used menus may be shadow-processed, marked with a distinctive color, highlighted, or enlarged.

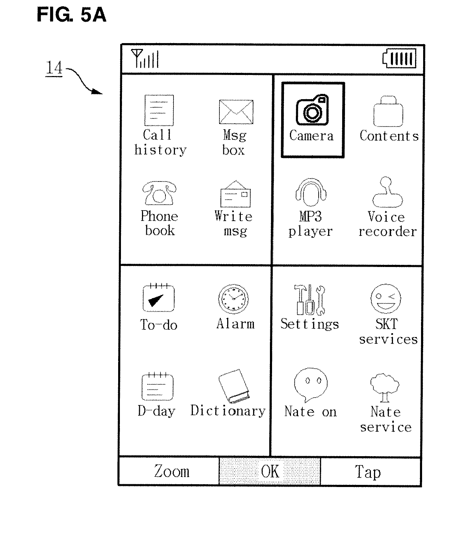

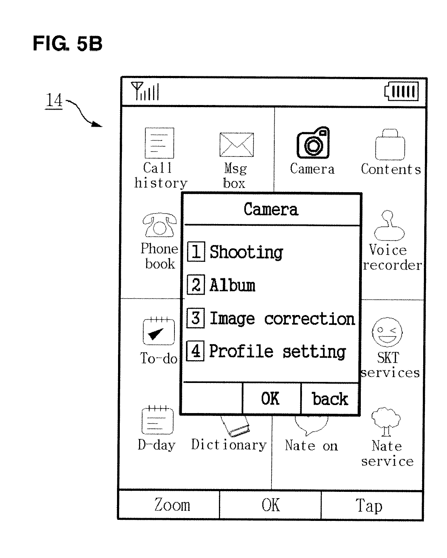

FIGS. 5A and 5B are examples of screens that display the result of a menu selection through the display of FIG. 1.

The menus shown in FIGS. 3a to 4C and displayed through the display 14 in step S200 or S300 may be selected through the input 12. For example, as shown in FIG. 5A, a desired menu is accessed by using navigation keys, which are one of the input 12, and then the menu may be selected by pressing a confirm button or an OK button on the screen. At this time, if a selected menu icon corresponds to an execution menu, the corresponding menu is executed.

On the other hand, if sub-menus exist within the selected menu, as shown in FIG. 5B, the sub-menus are additionally displayed by pop-up. Functions associated with the sub-menus may be selected by selecting the bottom menus displayed by pop-up through the input 12 in a similar method to the methods explained above. The pop-up screen of FIG. 5B is removed by selecting the back menu.

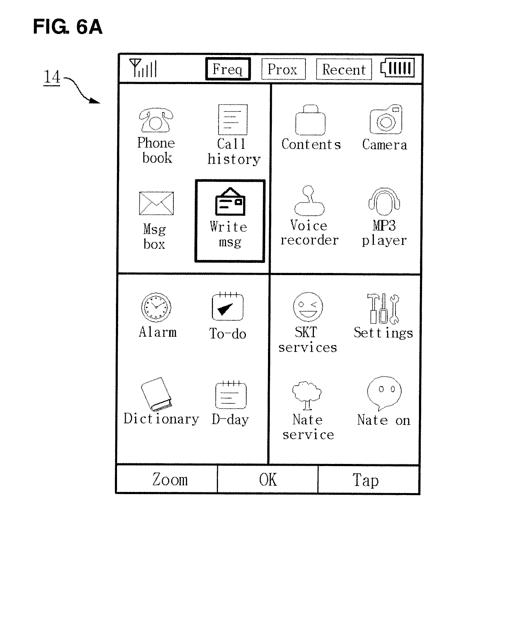

FIGS. 6A to 6C are examples of a screen that displays the results of sorting the menus via the display of FIG. 1.

The menu display method of a terminal according to one embodiment may further comprise the step of displaying a sorting menu.

The sorting menus shown in FIGS. 6A to 6C may be further displayed at parts of the menu screens as shown in FIGS. 3a to 4C or so as to be identified. At this time, the sorting methods may vary, including frequently used sorting, proximity sorting, and recent sorting.

Referring to FIG. 6A, if the frequent sorting is selected among the sorting methods, the menus that have been used most frequently may be aligned at a specific position, for example, at the boundary line of the quadrants on the menu screen of FIGS. 3a to 3C. In one embodiment, the most frequently used menus are positioned at four center points of the quadrants, and the frequently used menus of the corresponding groups may be aligned on the boundary line of a cruciform according to the frequency of use.

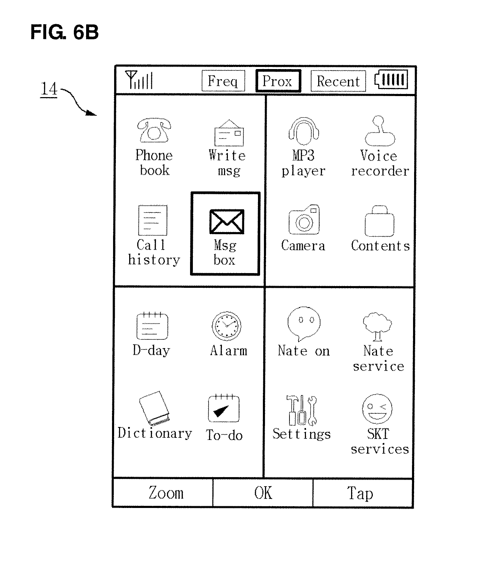

Referring to FIG. 6B, when the proximity sorting is selected from the sorting methods, the menus belonging to each of the groups of the quadrant may be set such that the menus are aligned according to the degree of proximity. According to this method, the menus in proximity to each other can be sequentially used. Also, after the menus in proximity to each other are firstly aligned in order to select desired menus, the next step may be performed.

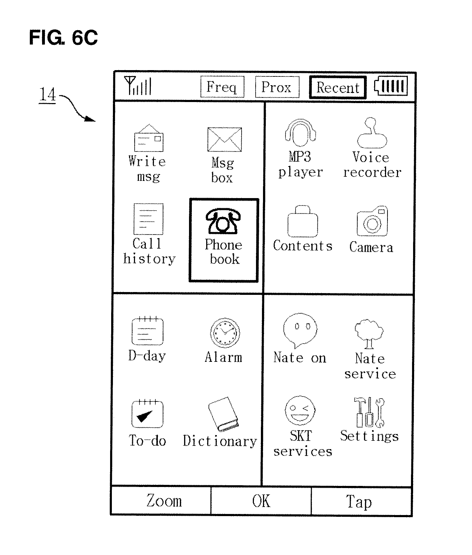

Referring to FIG. 6C, it is possible to align the most recently used menus around the center points of the quadrants by selecting the recent sorting method among the sorting methods. Such a sorting method may be useful when the recently used menus are used repeatedly

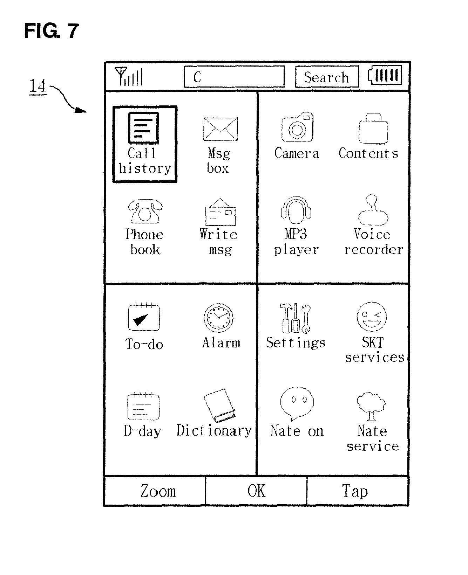

FIG. 7 is an example of the screen that displays the result of a menu search through the display of FIG. 1.

Referring to FIG. 7, the menu display method of a terminal according to one embodiment may further comprise the step of displaying a search window for searching menus and entering a search word into the search window or displaying a search result in case of a search request.

The search result may be displayed such that the searched menus are distinguished from the other menus. The searched menus are distinguished from the other menus by either shade, highlight, enlarge or a combination thereof. In another example, the search result may be aligned at the boundary lines of the quadrant that divides the groups of the menus as shown in FIGS. 3A to 4C. Since the searched menus are aligned at the boundary lines of the quadrant, the searched menus may be easily accessed by using only navigation keys which are one of the input 12.

Although embodiments have been described above, the present invention is not limited thereto.

Although the above embodiment has been described with the menus that are divided into four quadrants and sorted by groups for display, the menus may be divided into three, six, etc. However, in an alternative embodiment, the menus may be displayed without division by groups.

Although the above embodiment has been described that the menus are displayed in an icon form, they may be displayed by either general characters, numbers or special characters or a combination thereof with or without the icon.

Although the above embodiment has been described that the menus are visually displayed, the menus may be provided so that they may be recognized with other senses. For example, the menus may be provided in Braille that the blind may recognize tactually. In this case, the number of the menus provided in Braille may be larger or smaller by zoom in or zoom out.

Although the above embodiment has been described that the total number of the menus to be zoomed in or out on the display increases or decreases by two or three square of "4", the total number of the menus to be zoomed in or out on the display may be various. For example, the total number of the menus to be zoomed out on the display may increase or decrease by one of multiples of "4", for example, "8" or "12".

Although the above embodiment has been described with respect to methods for aligning menus to be sorted by groups, the methods for aligning menus are not limited thereto. For example, the menus may be arbitrarily aligned by drag (slide) and drop by the user. In another example, the menus may be aligned in various methods, such as in name order, size order, creation date order, or format order.

The present invention may be practiced in a hand held communication device, personal digital assistant (PDA), other terminal device.

The present invention may be practiced in software stored on a computer readable medium such as a disk or computer memory device. A description of how a computer works is found in "How Computers Work," Ron White, Que Publishing, 8th Edition, November 2005, the entire contents of which being incorporated herein by reference.

Although the embodiment of the present invention has been described with reference to the accompanying drawings, it will be appreciated that the above described invention may be embodied in other specific forms without departing from the spirit or essential characteristics thereof. The present embodiments are, therefore, to be considered in all aspects as illustrative and not restrictive, the scope of the invention being indicated by the appended claims rather than by the foregoing description, and all changes which come within the meaning and range of equivalency are, therefore, intended to be embraced therein.

## Claims

1. A method of displaying plural menu icons on a display screen of a terminal, comprising:
selecting a menu display mode on the terminal;
displaying a predetermined number of menu icons when the menu display mode is selected; and
changing the predetermined number of displayed menu icons when a zoom function is selected.

2. The method of claim 1, wherein the step of displaying a predetermined number of menu icons comprises:
displaying at least one of a character, a number, and a symbol with one of the predetermined number of menu icons.

3. The method of claim 1, wherein the step of displaying a predetermined number of menu icons comprises:
displaying the predetermined number of menu icons by groups.

4. The method of claim 3, wherein the step of displaying a predetermined number of menu icons by groups comprises:
displaying the predetermined number of menu icons in quadrants.

5. The method of claim 4, wherein the step of displaying the predetermined number of menu icons in quadrants comprises:
displaying frequently used menu icons in positions adjacent to inner boundary lines of the quadrants.

6. The method of claim 5, wherein the step of displaying frequently used menus in positions adjacent to inner boundary lines of the quadrants comprises:
displaying more frequently used menu icons closer to the inner boundary lines of the quadrants when the zoom function is selected.

7. The method of claim 1, further comprising:
selecting a menu icon and, if a corresponding program is an execution program, executing the execution program; and
if a sub-menu exists relative to the selected menu, displaying the sub-menu via a pop-up display.

8. The method of claim 1, further comprising:
displaying a menu icon sorting menu.

9. The method of claim 2, further comprising:
displaying a search window for searching menu icons, entering a search word in the search window and displaying a search result menu icon.

10. The method of claim 9, wherein the step of displaying a search result menu icon comprises:
displaying the search result menu icon in a manner that is visually distinguishable from other menu icons.

11. The method of claim 10, wherein the step of displaying the search result menu icon in a manner that is visually distinguishable comprises:
displaying the search result menu icon with either shade, highlight, enlargement or a combination thereof.

12. The method of claim 1, wherein the step of displaying a predetermined number of menu icons comprises:
displaying menu icons that were displayed when the menu display mode was last accessed.

13. The method of claim 3, further comprising:
playing a group specific audio sound when a menu icon is selected.

14. A terminal, comprising:
an input configured to enable a user to select a menu display mode and to select a zoom function;
a display; and
a controller configured to control the display so as to display a predetermined number of menu icons corresponding to the menu display mode that is selected, and to change the number of displayed menu icons when the zoom function is selected.

15. The terminal of claim 14, wherein the controller is configured to control the display to display the predetermined number of menu icons in display quadrants.

16. The terminal of claim 14, wherein, upon selecting the menu display mode, the controller is configured to control the display to display menu icons that were frequently used in one or more prior sessions of the selected menu display mode.

17. The terminal of claim 15, wherein the controller is configured to cause the display to display the frequently used in display locations adjacent to inner boundary lines of the quadrants.

18. The terminal of claim 15, further comprising:
an audio device configured to play a quadrant-specific audio sound when a menu icon is selected.

19. The terminal of claim 14, wherein the controller is configured to cause the display to display menu icons that were displayed when the menu display mode was last accessed.

20. The terminal of claim 14, wherein the controller is configured to cause the display to display a search window for searching menu icons and to display a search result menu icon.

21. The terminal of claim 14, wherein the controller is configured to cause the display to display a menu icon sorting menu.
